# EUROPEAN PATENT APPLICATION

(11) **EP 2 775 596 A1**
(43) Date of publication of application: **10.09.2014**
(21) Application number: 13158196.9
(22) Date of filing: 07.03.2013
(51) Int. Cl.: H02M 1/12, H02M 1/42

(54) **A switch mode power supply**

(71) Applicant: Vestel Elektronik Sanayi ve Ticaret A.S., 45030 Manisa (TR)
(72) Inventor: Yildirim, Omer, 45030 Manisa (TR); Ozen, Erol, 45030 MANISA (TR)
(74) Representative: Cayli, Hülya

(57) **Abstract**

SMPS system of the present invention comprises rectifier (F) for rectifying AC voltage received from a line input (S); capacitor (C1), which is connected to output of the rectifier (F) for filtering rectified voltage; transformer (T), which is receiving filtered voltage from a first winding via at least one switching means (M3, M4) and which outputs output voltage (V_{O1}, V_{O2}, V_{On}) from second winding; first switching means (M1), which is in series to said capacitor (C1) and which limits the voltage of said capacitor (C1); first resistor (R1) which is connected between the return of the first winding of transformer (T) and rectifier (F); controller (C) which receives first feedback signal from output voltage (V_{O1}, V_{O2}, V_{On}) through first feedback line (F1), receives second feedback signal from first resistor (R1) through second feedback line (F2), controls the operation of the switching means (M3, M4) connected to input of the transformer (T), and generates a reference voltage according to second feedback signal; comparator (P) which compares said reference voltage with a second reference voltage, which depends on the output of the rectifier (F), and generates a threshold voltage according to comparison result; second switching means (M2) which performs "not" operation to said threshold voltage and controls the operation of the first switching means (M1).

## Description

### Technical Field

The present invention is related to switch mode power supplies.

### Prior Art

Switch mode power supplies (SMPS) are widely used in modern electronic devices. This type of power supplies can supply medium to high power outputs and can be constructed in small sizes compared to linear supplies. In order to comply with the CE standards, response to the line harmonics (harmonic currents) of said supplies should be under standard levels. Therefore, one of the aim of the SMPS manufacturers is reducing line harmonics in these power supplies.

In the known art, several systems are used for reducing the harmonic currents. One exemplary system is two stage power system as disclosed in patent document US2008278131A1. In this system, one stage comprises an active compensation circuit and other stage comprises SMPS circuit with a DC filter capacitor. With this system, harmonic currents are reduced to desired levels. Furthermore, power factor of these systems are above 0.9. However, because of the two stages, these systems occupy relatively large area (for example in an LCD television). Moreover, components of these systems are expansive.

Another exemplary system is a one stage power system. In this system, SMPS circuit is directly connected to compensation circuit (without DC filter capacitor). Since these systems do not comprise DC filter capacitor, they occupy less space and they are cheaper as compared to the two stage power systems. However, these systems do not tolerate the input changes. For example, when there is a voltage change in input, one stage power systems usually shut downs.

### Brief Description of the Invention

SMPS system of the present invention comprises at least one rectifier for rectifying AC voltage received from a line input; at least one capacitor, which is connected to output of the rectifier for filtering rectified voltage; at least one transformer, which is receiving filtered voltage from a first winding via at least one switching means and which outputs at least one output voltage from at least one second winding; at least one first switching means, which is in series to said capacitor and which limits the voltage of said capacitor; at least one first resistor which is connected between the return of the first winding of said transformer and rectifier; at least one controller which receives a first feedback signal from at least one output voltage through a first feedback line, receives at least one second feedback signal from the first resistor connected between the return of the first winding of said transformer and rectifier through a second feedback line, controls the operation of the switching means connected to input of the transformer, and generates a reference voltage according to second feedback signal; at least one comparator which compares said reference voltage with a second reference voltage, which depends on the output of the rectifier, and generates a threshold voltage according to comparison result; at least one second switching means which performs a "not" operation to said threshold voltage and controls the operation of the first switching means.

According to present invention, charging level of the capacitor is limited using said controller, comparator, first switching means and second switching means. Since voltage fed to the first winding of the transformer is limited by charging level of the capacitor, harmonics of the voltage return from the transformer to the rectifier are able to be reduced (by controlling charging level of the capacitor according to harmonic levels). Furthermore, since size of said components are relatively small, the size of the SMPS of the present invention is also relatively small.

### Object of the Invention

The object of the invention is to provide a switch mode power supply with reduces harmonic levels.

Another object of the invention is to provide a switch mode power supply which has reduced number of components.

Another object of the invention is to provide a switch mode power supply which is small in size.

### Description of the Drawings

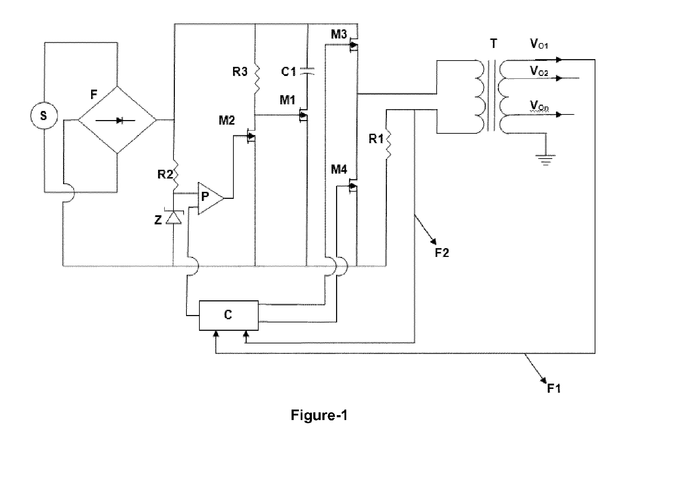

Figure 1 shows an embodiment of the power supply of the invention.

The references in the figures may possess following meanings;

| | |
|---|---|
| Line input | (S) |
| Rectifier | (F) |
| First switching means | (M1) |
| Second switching means | (M2) |
| Third switching means | (M3) |
| Fourth switching means | (M4) |
| Capacitor | (C1) |
| Transformer | (T) |
| Output voltage | (V_{O1}, V_{O2}, V_{On}) |
| Controller | (C) |
| Comparator | (P) |
| Zener diode | (Z) |
| First resistor | (R1) |
| Second resistor | (R2) |
| Third resistor | (R3) |
| First feedback line | (F1) |
| Second feedback line | (F2) |

### Description of the Invention

In the switch mode power supplies, an AC voltage is converted to at least one DC voltage (usually more than one voltage level). SMPS systems mainly comprises at least one rectifier for rectifying AC line voltage; at least one transformer which is connected to output of said rectifier and which outputs at least one DC voltage; at least one switching unit for connecting the transformer with rectifier; and at least one controlling for controlling the operation of said switching unit. In order to keep output voltage at a desired level, said controller usually receives a feedback signal from at least one output of the transformer. In SMPS systems a current, composed of harmonics (harmonic currents), returns to the line input. Since said harmonic current reduces the power factor of the system, they are undesired. Therefore, aim of the present invention is reducing said unwanted harmonics.

SMPS system of the present invention, which is shown in figure 1, comprises at least one rectifier (F) for rectifying AC voltage received from a line input (S); at least one capacitor (C1), which is connected to output of the rectifier (F) for filtering rectified voltage; at least one transformer (T), which is receiving filtered voltage from a first winding via at least one switching means (M3, M4) and which outputs at least one output voltage (V_{O1}, V_{O2}, V_{On}) from at least one second winding; at least one first switching means (M1), which is in series to said capacitor (C1) and which limits the voltage of said capacitor (C1); at least one first resistor (R1) which is connected between the return of the first winding of said transformer (T) and rectifier (F); at least one controller (C) which receives a first feedback signal from at least one output voltage (V_{O1}, V_{O2}, V_{On}) through a first feedback line (F1), receives at least one second feedback signal from the first resistor (R1) connected between the return of the first winding of said transformer (T) and rectifier (F) through a second feedback line (F2), controls the operation of the switching means (M3, M4) connected to input of the transformer (T), and generates a reference voltage according to second feedback signal; at least one comparator (P) which compares said reference voltage with a second reference voltage, which depends on the output of the rectifier (F), and generates a threshold voltage according to comparison result; and at least one second switching means (M2) which performs a "NOT" operation to said threshold voltage and controls the operation of the first switching means (M1). In the present invention, said comparator (P) outputs either a low level signal (for example 0V) or a high voltage (for example 10-12V), according to comparison result. According to the present invention, since operation of said capacitor (C1) is controlled by said first switching means (M1), capacitor (C1) is not always active. Therefore, voltage inputted to transformer (T) is limited by charging level of the capacitor (C1). In the present invention, controller (C) detects the harmonic currents (currents passing through the first resistor (R1)) via said second feedback signal. If said harmonic currents are above a predefined level, voltage of the capacitor (C1) is limited through first switching means (M1). Therefore, harmonic currents passing from the first resistor (R1) are reduced.

According to present invention, since voltage inputted to transformer (T) is a disturbed DC (whose level is limited by capacitor (C1) and first switching means (M1)), output voltage (V_{O1}, V_{O2}, V_{On}) of said transformer (T) is also a disturbed DC. In order to prevent disturbed output voltage (V_{O1}, V_{O2}, V_{On}), SMPS of the present invention preferably comprises at least one DC filter at the second winding of the transformer (T). Said DC filter, which is at the second winding of the transformer (T), is preferably at least one capacitor.

In an exemplary embodiment of the present invention, at least one of said switching means (M1, M2, M3, M4) (preferably all of them) is a mosfet transistor.

In a preferred embodiment of the present invention, output of the said rectifier (F) is fed to the comparator (P) through at least one second resistor (R2) and at least one zener diode (Z). In this embodiment, zener diode (Z) and the second resistor (R2) are connected to output of the rectifier (F) in series and one input of said comparator (P) is connected between the zener diode (Z) and the second resistor (R2). According to this embodiment, voltage is fed to the comparator (P) when voltage of the zener diode (Z) is above breakdown voltage.

According to present invention, charging level of the capacitor (C1) is limited using said controller (C), comparator (P), first switching means (M1) and second switching means (M2). Since voltage fed to the first winding of the transformer (T) is limited by charging level of the capacitor (C1), harmonics of the voltage return from the transformer (T) to the rectifier are reduced. Furthermore, since sizes of said components are relatively small, the size of the SMPS of the present invention is also relatively small.

## Claims

1. A switching mode power supply system comprising at least one rectifier (F) for rectifying AC voltage received from a line input (S); at least one capacitor (C1), which is connected to output of the rectifier (F) for filtering rectified voltage; at least one transformer (T), which is receiving filtered voltage from a first winding via at least one switching means (M3, M4) and which outputs at least one output voltage (V_{O1}, V_{O2}, V_{On}) from at least one second winding, **characterized in that** said system further comprises;
- at least one first switching means (M1), which is in series to said capacitor (C1) and which limits the voltage of said capacitor (C1);
- at least one first resistor (R1) which is connected between the return of the first winding of said transformer (T) and rectifier (F);
- at least one controller (C) which receives a first feedback signal from at least one output voltage (V_{O1}, V_{O2}, V_{On}) through a first feedback line (F1), receives at least one second feedback signal from the first resistor (R1) connected between the return of the first winding of said transformer (T) and rectifier (F) through a second feedback line (F2), controls the operation of the switching means (M3, M4) connected to input of the transformer (T), and generates a reference voltage according to second feedback signal;
- at least one comparator (P) which compares said reference voltage with a second reference voltage, which depends on the output of the rectifier (F), and generates a threshold voltage according to comparison result;
- at least one second switching means (M2) which performs a "NOT" operation to said threshold voltage and controls the operation of the first switching means (M1).

2. A switching mode power supply system according to claim 1, **characterized in that**; said system further comprises at least one DC filter at the second winding of the transformer (T).

3. A switching mode power supply system according to claim 2, **characterized in that**; said DC filter is a capacitor.

4. A switching mode power supply system according to claim 1, **characterized in that**; said system further comprises at least one second resistor (R2) and at least one zener diode (Z) for feeding the output of the said rectifier (F) to the comparator (P)

5. A switching mode power supply system according to claim 4, **characterized in that**; zener diode (Z) and the second resistor (R2) are connected to output of the rectifier (F) in series and one input of said comparator (P) is connected between the zener diode (Z) and the second resistor (R2)

6. A switching mode power supply system according to claim 1, **characterized in that**; at least one of said switching means (M1, M2, M3, M4) is a mosfet transistor.
